# FASCICULE DE BREVET EUROPEEN

(11) **EP 0 592 278 B1**
(45) Date de publication et mention de la délivrance du brevet: **11.12.1996**
(21) Numéro de dépôt: 93402360.7
(22) Date de dépôt: 27.09.1993
(51) Int. Cl.: B62D 1/18

(54) **Dispositif de blocage en position d'une colonne de direction réglable notamment de véhicule automobile et ensemble de colonne comportant un tel dispositif**
Lagesperrvorrichtung für eine verstellbare Lenksäule zum Beispiel eines Kraftfahrzeuges und Lenksäuleneinrichtung mit so einer Vorrichtung
Device for locking an adjustable steering column for example of an automotive vehicle and steering column unit comprising such a device

(30) Priorité: 06.10.1992 FR 9211837
(43) Date de publication de la demande: 13.04.1994
(73) Titulaire: ECIA - EQUIPEMENTS ET COMPOSANTS POUR L'INDUSTRIE AUTOMOBILE, F-25400 Audincourt (FR)
(72) Inventeur: Hoblingre, André, F-25700 Valentigney (FR); Courvoisier, Patrick, F-25600 Vieux-Charmont (FR)
(74) Mandataire: Habasque, Etienne Joel Jean-François

(56) Documents cités:
- EP-A- 0 242 928
- EP-A- 0 427 584
- EP-A- 0 443 910
- EP-A- 0 493 181
- DE-A- 4 016 163
- GB-A- 2 113 164
- US-A- 4 244 237

## Description

La présente invention concerne un dispositif de blocage en position d'une colonne de direction réglable notamment de véhicule automobile et un ensemble de colonne comportant un tel dispositif.

Certains véhicules automobiles sont munis depuis déjà plusieurs années de dispositifs de réglage de la position du volant, destinés à adapter la position de celui-ci à la morphologie du conducteur du véhicule.

C'est ainsi que la position de la colonne et donc du volant est réglable axialement et par pivotement.

Dans l'état de la technique, ces dispositifs de réglage comportent une structure de support de colonne reliée au reste de la structure du véhicule et comportant deux flasques entre lesquels est disposée la colonne et des moyens de blocage de la colonne en position par rapprochement de flasques.

Ces moyens de blocage comprennent par exemple un tirant s'étendant entre les flasques, dont une première extrémité est en appui sur l'un des flasques et dont une seconde est reliée à des éléments de blocage.

Différents modes de réalisation de ces éléments de blocage ont été proposés.

C'est ainsi par exemple, que ces éléments de blocage peuvent être constitués par un système à vis-écrou, un système à genouillère, ou encore un système à excentrique, relié à un levier de manoeuvre.

Un autre mode de réalisation de ces moyens de blocage est décrit dans le document GB-A-2 113 164 au nom de FORD MOTOR COMPANY LIMITED.

Ce document décrit en effet un dispositif dont la structure générale se présente sous la forme décrite précédemment et dans laquelle les éléments de blocage comprennent un organe de butée à la seconde extrémité du tirant, un organe d'appui intermédiaire en contact avec l'autre flasque de la structure de support et déplaçable axialement sur le tirant et un organe de manoeuvre disposé entre l'organe de butée et l'organe d'appui intermédiaire, relié à un levier de manoeuvre, et déplaçable à rotation dans un plan perpendiculaire au tirant, entre une position active de blocage de la colonne et une position escamotée de déblocage de celle-ci.

Les surfaces en regard de l'organe de manoeuvre et de l'organe d'appui intermédiaire ou de l'organe de butée, comprennent l'une, au moins une partie en saillie adaptée pour coopérer avec une rampe de l'autre, pour écarter ces deux surfaces l'une de l'autre et donc les éléments de blocage correspondants afin de rapprocher les flasques pour bloquer la colonne, lors du déplacement du levier de manoeuvre.

Dans le mode de réalisation décrit dans ce document, les parties en saillie sont constituées par des bossages venus de matière avec l'organe de manoeuvre et les rampes sont ménagées sur l'organe d'appui intermédiaire.

On connaît également du document EP-A-0 427 584, un dispositif de ce type conforme au préambule de la revendication 1 dans lequel les moyens d'écartement comprennent au moins un organe de roulement déplaçable axialement.

Cependant, ces dispositifs présentent un certain nombre d'inconvénients au niveau de la manoeuvre du levier.

En effet, on conçoit que plus le serrage de la colonne à obtenir est important, plus les frottements entre ces différents éléments de blocage sont importants et donc plus la manoeuvre du levier est difficile.

Le document FR-A-2 671 040 au nom de la Demanderesse, propose différentes solutions pour résoudre ces problèmes.

A cet effet, ce document concerne un dispositif de blocage tel que décrit précédemment, dans lequel ladite partie en saillie comprend un organe de roulement relié à l'élément de blocage correspondant.

Deux organes de roulement peuvent être disposés sur l'élément de blocage correspondant, de part et d'autre du tirant et être adaptés pour coopérer chacun avec une rampe en regard, de la surface correspondante de l'autre élément.

Avantageusement, ces organes de roulement sont interposés entre l'organe de manoeuvre et l'organe d'appui intermédiaire et des éléments de roulement sont interposés entre l'organe de butée et l'organe de manoeuvre.

Selon un mode de réalisation particulièrement avantageux décrit dans ce document, le ou chaque organe de roulement interposé entre l'organe de manoeuvre et l'organe d'appui intermédiaire et le ou chaque élément de roulement interposé entre l'organe de manoeuvre et l'organe de butée de la seconde extrémité du tirant, sont disposés deux à deux dans un même évidement traversant l'organe de manoeuvre, en appui l'un contre l'autre, l'un faisant saillie entre l'organe de manoeuvre et l'organe d'appui intermédiaire et l'autre, entre l'organe de manoeuvre et l'organe de butée.

Il est mentionné dans ce document que ces organes et ces éléments de roulement peuvent être constitués par des billes.

Cependant, les différents modes de réalisation décrits dans ce document, bien que présentant un certain nombre d'avantages par rapport aux dispositifs classiques, restent le siège de frottements et d'usure de pièces et en particulier des organes et des éléments de roulement, ce qui à la longue se traduit par des problèmes de fonctionnement du dispositif.

Bien entendu, ces problèmes peuvent être résolus en utilisant des pièces présentant des caractéristiques de résistance mécanique adaptées, mais ceci se traduit alors par une augmentation du coût de fabrication du dispositif.

Le but de la présente invention est de résoudre ces problèmes d'usure en proposant un dispositif qui soit simple, fiable dont le prix de revient soit le plus faible possible.

A cet effet, l'invention a pour objet un dispositif de blocage en position d'une colonne de direction réglable notamment de véhicule automobile, du type comportant une structure de support de colonne, reliée au reste de la structure du véhicule et comportant deux flasques entre lesquels est disposée la colonne, et des moyens de blocage de la colonne en position par rapprochement des flasques, comprenant un tirant s'étendant entre les flasques, dont une première extrémité comporte des moyens d'appui sur l'un des flasques et dont une seconde extrémité est reliée à des éléments de blocage comprenant un organe de butée, à la seconde extrémité du tirant, un premier organe d'appui intermédiaire en contact avec l'autre flasque de la structure de support et déplaçable axialement sur le tirant et des moyens d'écartement disposés entre l'organe de butée et l'organe d'appui intermédiaire, reliés à des moyens de manoeuvre et déplaçables à rotation dans un plan perpendiculaire au tirant entre une position active de blocage de la colonne et une position escamotée de déblocage de celle-ci, les moyens d'écartement comprenant au moins un organe de roulement disposé entre des surfaces en regard de ces organes d'appui intermédiaire et de butée, et des moyens de déplacement de cet organe de roulement le long d'une rampe prévue sur la surface correspondante de l'organe d'appui intermédiaire, ces moyens de déplacement étant reliés aux moyens de manoeuvre et déplaçables à rotation autour du tirant pour amener l'organe de roulement à écarter ces surfaces en regard de l'organe d'appui intermédiaire et de l'organe de butée, afin de rapprocher les flasques et bloquer la colonne en position, caractérisé en ce que ledit au moins un organe de roulement est déplaçable en rotation autour du tirant et en ce qu'au moins une partie du tirant reliée à l'organe de butée est déplaçable en rotation pour suivre les déplacements dudit au moins un organe de roulement.

Selon un autre aspect, l'invention a également pour objet un ensemble de colonne de direction réglable en position pour véhicule automobile, caractérisé en ce qu'il comporte un dispositif de blocage selon l'une quelconque des revendications précédentes.

L'invention sera mieux comprise à l'aide de la description qui va suivre, donnée uniquement à titre d'exemple et faite en se référant aux dessins annexés, sur lesquels :
- la Fig.1 représente une vue en perspective éclatée d'un dispositif de blocage en position d'une colonne de direction réglable de véhicule, décrit dans le document GB-A-2 113 164;
- la Fig.2 représente une vue en perspective d'un mode de réalisation de moyens de blocage entrant dans la constitution d'un dispositif de blocage décrit dans le document FR-A-2 671 040; et
- la Fig.3 représente une vue en coupe d'un mode de réalisation de moyens de blocage entrant dans la constitution d'un dispositif de blocage selon l'invention.

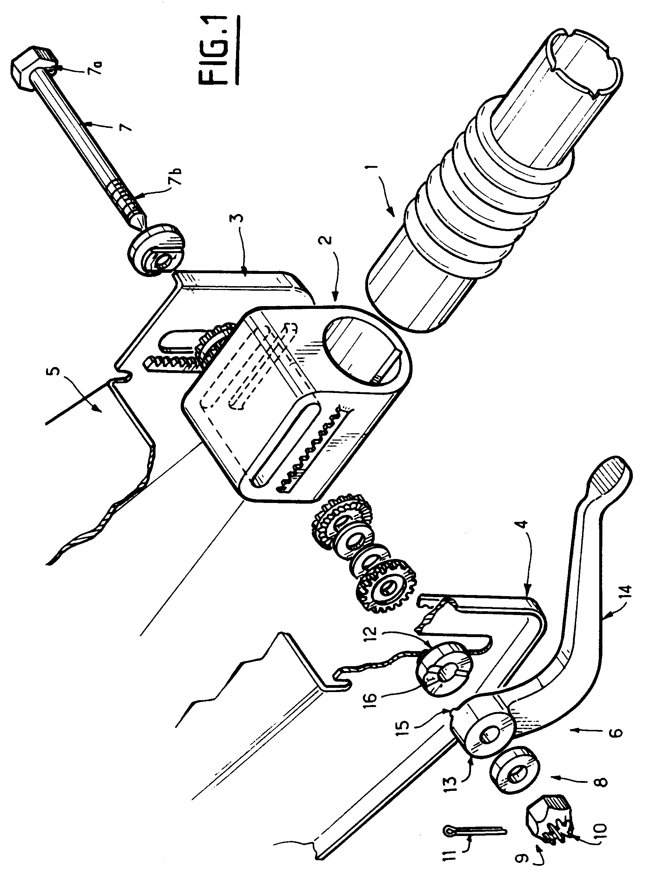

Ainsi qu'on peut le voir sur la Fig.1, qui représente un dispositif de blocage en position d'une colonne de direction réglable 1 de véhicule, décrit dans le document GB-A-2 113 164, cette colonne 1 est disposée dans un organe de liaison 2 interposé entre les flasques 3 et 4 d'une structure 5 de support de colonne, reliée au reste de la structure du véhicule par tous moyens appropriés.

Ce dispositif comporte également des moyens 6 de blocage de la colonne en position par rapprochement des flasques 3 et 4 de la structure de support. Ces moyens de blocage comprennent par exemple un tirant 7 s'étendant entre les deux flasques 3 et 4 de la structure de support et dont une première extrémité 7a est en appui sur l'un des flasques, par exemple 3, et dont l'autre extrémité 7b est reliée à des éléments de blocage 8.

Ces éléments de blocage comprennent un organe de butée 9 constitué par exemple par un écrou 10 associé à une goupille 11, et disposé à la seconde extrémité 7b du tirant 7, un organe d'appui intermédiaire 12 en contact avec l'autre flasque 4 de la structure de support et déplaçable axialement sur le tirant 7 et enfin un organe de manoeuvre 13 disposé entre l'organe de butée 9 et l'organe d'appui intermédiaire 12, relié à un levier de manoeuvre 14 et déplaçable à rotation dans un plan perpendiculaire au tirant 7, entre une position active de blocage de la colonne et une position escamotée de déblocage de celle-ci.

Dans le mode de réalisation représenté sur cette figure, les surfaces en regard de l'organe de manoeuvre 13 et de l'organe d'appui intermédiaire 12 comportent l'une, des parties en saillie 15 adaptée pour coopérer avec des rampes 16 de l'autre, pour écarter ces deux surfaces l'une de l'autre et donc les éléments de blocage correspondants afin de rapprocher les flasques pour bloquer la colonne en position, lors du déplacement du levier de manoeuvre.

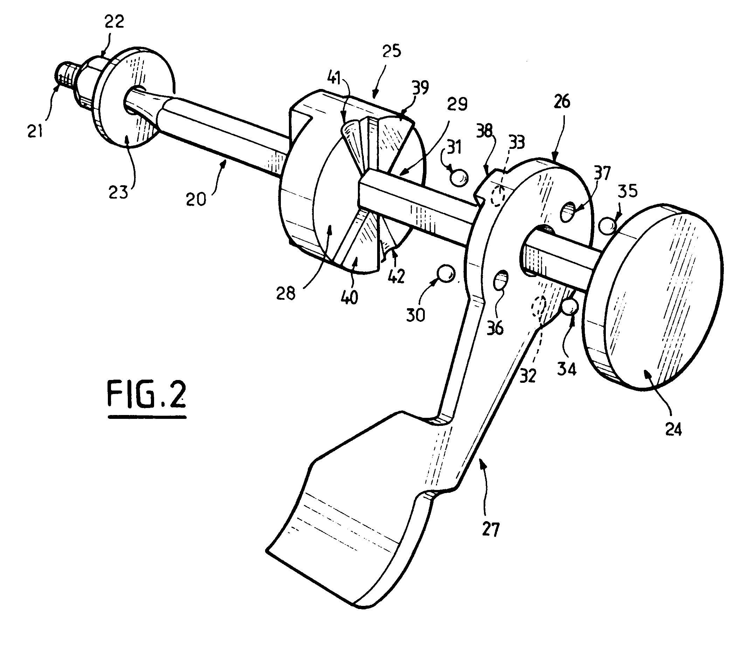

Si l'on se reporte maintenant à la Fig.2, qui représente une vue en perspective de moyens de blocage entrant dans la constitution d'un dispositif de blocage décrit dans le document FR-A-2 671 040, on peut constater que ces moyens comportent également un tirant 20 dont l'une des extrémités 21 est filetée et adaptée pour coopérer avec un écrou 22 et une rondelle 23 d'appui sur l'un des flasques de la structure de support.

On notera que les parties du dispositif non décrites en regard de cette figure, peuvent être identiques à celles décrites en regard de la Fig.1.

L'autre extrémité du tirant porte des éléments de blocage qui comprennent un organe de butée 24 constitué par exemple par une plaque de butée fixée à l'extrémité correspondante du tirant 20, et un organe d'appui intermédiaire 25 adapté pour s'appuyer contre l'autre flasque de la structure de support, cet organe d'appui intermédiaire étant monté déplaçable axialement sur le tirant.

Ces éléments de blocage comprennent également un organe de manoeuvre 26 disposé entre l'organe de butée 24 et l'organe d'appui intermédiaire 25, relié à un levier de manoeuvre 27 et déplaçable à rotation dans un plan perpendiculaire au tirant 20 entre une position active de blocage de la colonne et une position escamotée de déblocage de celle-ci.

Ainsi qu'on peut le constater, la surface de l'organe d'appui intermédiaire 25 en regard de l'organe de manoeuvre, comporte des rampes 28 et 29 par exemple diamétralement opposées, qui sont adaptées pour coopérer avec des parties en saillie sur la surface correspondante de l'organe de manoeuvre 26.

Plus particulièrement, ces parties en saillie peuvent être constituées par des organes de roulement reliés à cet organe de manoeuvre, ces organes de roulement étant constitués par exemple par des billes 30 et 31 disposées dans des évidements respectivement 32 et 33 ménagés dans la surface correspondante de l'organe de manoeuvre 26.

Il est indiqué dans ce document que des éléments de roulement constitués par exemple par des billes 34 et 35 peuvent également être disposés entre l'organe de butée 24 et l'organe de manoeuvre 26.

Ces billes sont par exemple disposées dans des évidements 36 et 37 ménagés dans la surface correspondante de l'organe de manoeuvre 26, en regard de l'organe de butée 24.

Le déplacement de l'organe de manoeuvre 26 et donc du levier de manoeuvre 27 est facilité dans la mesure où ces organes et éléments de roulement facilitent le déplacement des différents éléments de blocage les uns par rapport aux autres.

Les éléments de roulement 34 et 35 assurent un maintien en position correcte de l'organe de manoeuvre 26 par rapport à l'organe de butée 24 tout en facilitant le déplacement de l'organe de manoeuvre pendant que les organes de roulement 30 et 31 se déplacent sur les rampes 28 et 29 de l'organe d'appui intermédiaire 25, pour écarter les surfaces en regard de cet organe d'appui intermédiaire et de l'organe de manoeuvre, afin d'écarter ces éléments de blocage pour rapprocher les flasques et bloquer la colonne en position lors du déplacement de l'organe de manoeuvre 26.

Ainsi qu'on l'a indiqué précédemment, ces dispositifs de l'état de la technique présentent un certain nombre d'inconvénients.

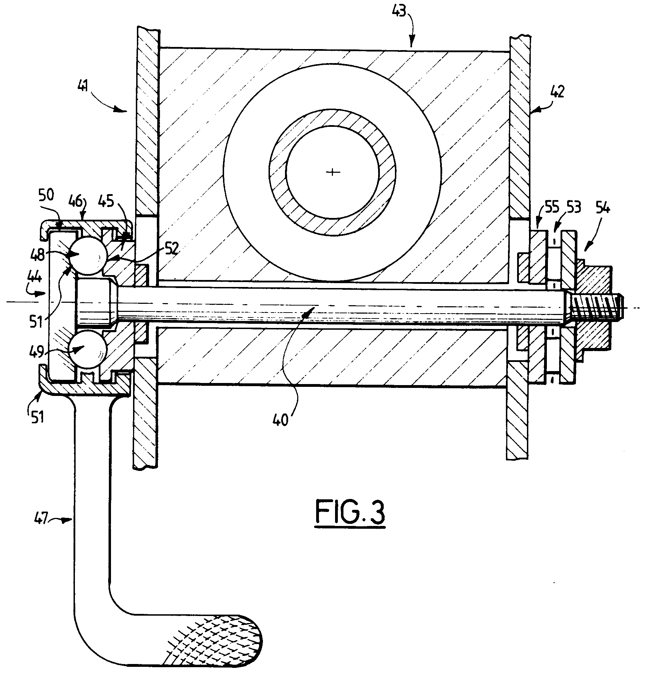

Sur la Fig.3, on a représenté un mode de réalisation de moyens de blocage entrant dans la constitution d'un dispositif de blocage selon l'invention.

Ces moyens de blocage comprennent toujours un tirant 40 s'étendant entre des flasques 41 et 42 d'une structure de support d'une colonne de direction désignée par la référence générale 43.

L'une des extrémités du tirant 40 est adaptée pour coopérer avec le flasque 41 et comporte un organe de butée 44 et un premier organe d'appui intermédiaire 45 déplaçable axialement sur le tirant 40, en contact contre le flasque 41 et bloqué en rotation par rapport à celui-ci. Des moyens d'écartement 46 sont disposés entre ces organes d'appui intermédiaire et de butée et sont reliés à un levier de manoeuvre 47 pour bloquer la colonne en position.

Ces moyens d'écartement comprennent au moins un organe de roulement et dans l'exemple illustré deux organes de roulement 48 et 49, constitué par exemple chacun par une bille, disposés de part et d'autre du tirant, entre des surfaces en regard de l'organe d'appui intermédiaire 45 et de l'organe de butée 44.

Des moyens 50 sont prévus pour déplacer le ou chaque organe de roulement 48,49 le long d'une rampe correspondante prévue sur la surface correspondante de l'organe d'appui intermédiaire 45.

La ou chaque rampe peut par exemple être constituée par une rampe analogue à la rampe 28 ou 29 de l'organe d'appui intermédiaire 25 décrit en regard de la Fig.2.

Ces moyens de déplacement 50 qui comprennent avantageusement une cage de déplacement du ou de chaque organe de roulement, sont reliés au levier de manoeuvre désigné par la référence générale 47 sur cette figure et sont montés déplaçables en rotation autour du tirant 40 pour amener le ou chaque organe de roulement 48,49 à écarter ces surfaces en regard de l'organe d'appui intermédiaire 45 et de l'organe de butée 44, afin de rapprocher les flasques et bloquer la colonne en position.

Dans l'exemple de réalisation représenté sur cette figure 3, les moyens de déplacement 50 constitués par la cage, sont reliés à un capot de protection 51 disposé autour des moyens de blocage et mobile en rotation autour de ceux-ci et le levier de manoeuvre 47 est venu de matière avec ce capot.

On notera également que le ou chaque organe de roulement est monté déplaçable entre la rampe correspondante de l'organe d'appui intermédiaire 45 et une gorge correspondante 51 ménagée dans la surface de l'organe de butée 44 en regard de la surface de l'organe d'appui intermédiaire sur laquelle est prévue la ou chaque rampe.

Bien entendu, cette rampe peut également être formée par le fond d'une gorge 52 de réception de la ou chaque bille, ménagée dans cet organe.

L'utilisation de ces gorges permet d'obtenir une meilleure répartition des efforts sur une surface de contact plus importante entre les pièces correspondantes.

Au moins une partie du tirant reliée à l'organe de butée et plus particulièrement dans l'exemple de réalisation représenté sur cette figure 3, l'ensemble du tirant 40 est monté rotatif dans les flasques de la structure de support, pour suivre les déplacements du ou de chaque organe de roulement afin de réduire les différents frottements consécutifs à ces déplacements.

Des moyens de roulement 53 constitués par exemple par une butée à aiguilles, peuvent alors être disposés à l'autre extrémité du tirant 40 entre des moyens d'appui 54 comprenant par exemple un écrou et une rondelle bloqués en rotation sur ce tirant 40 et un second organe d'appui intermédiaire 55, en contact contre l'autre flasque 42 et bloqué en rotation par rapport à celui-ci.

On conçoit alors que les différents efforts s'exerçant sur les différentes pièces de ce dispositif, sont répartis sur des surfaces de contact plus importantes entre le premier organe d'appui intermédiaire 45, le ou chaque organe de roulement 48,49, l'organe de butée 44, les moyens d'appui 54 du tirant, les moyens de roulement 53 et le second organe d'appui intermédiaire 55, ce qui permet de réduire l'usure de ces pièces et d'utiliser des pièces en matériaux classiques, c'est à dire n'ayant pas à subir de traitements métallurgiques coûteux destinés à augmenter leurs caractéristiques de résistance mécanique.

En effet, le déplacement de ces moyens de blocage entre leur position escamotée et leur position active, est réalisé par déplacement du ou de chaque organe de roulement grâce au levier et à la cage de déplacement reliée à celui-ci, l'organe de butée, le tirant, les moyens d'appui et les moyens de roulement suivant ce déplacement pour éviter tout frottement entre ces pièces.

Le seul frottement qui subsiste dans le dispositif selon l'invention est alors le frottement entre le ou chaque organe de roulement et la cage de déplacement de celui-ci, lors de la manoeuvre du levier.

Bien entendu, différentes dispositions de ces pièces peuvent être envisagées et il peut également être prévu différents moyens de limitation de la course de déplacement du levier, par exemple grâce à des parties en saillie complémentaires de l'organe d'appui intermédiaire et de la cage de déplacement de l'organe de roulement ou grâce à des évidements de la rampe et/ou de la gorge pour faire ressentir une discontinuité d'effort à l'utilisateur ainsi que cela est mentionné dans le document FR-A-2 671 040. Ces évidements permettent également par exemple de maintenir le dispositif en position de verrouillage.

Enfin, il va de soi que des moyens de manoeuvre autres qu'un levier, peuvent être utilisés comme par exemple des moyens d'assistance au déplacement,pilotés par exemple par un utilisateur comme cela est décrit dans la demande de brevet Français n° 92 02 101 déposée le 24 février 1992 au nom de la Demanderesse.

## Revendications

1. Dispositif de blocage en position d'une colonne de direction réglable notamment de véhicule automobile, du type comportant une structure de support de colonne, reliée au reste de la structure du véhicule et comportant deux flasques (41,42) entre lesquels est disposée la colonne (43), et des moyens de blocage de la colonne en position par rapprochement des flasques, comprenant un tirant (40) s'étendant entre les flasques, dont une première extrémité comporte des moyens (54) d'appui sur l'un des flasques (42) et dont une seconde extrémité est reliée à des éléments de blocage comprenant un organe de butée (44), à la seconde extrémité du tirant, un premier organe d'appui intermédiaire (45) en contact avec l'autre flasque (41) de la structure de support et déplaçable axialement sur le tirant et des moyens d'écartement (46) disposés entre l'organe de butée et l'organe d'appui intermédiaire, reliés à des moyens de manoeuvre (47) et déplaçables à rotation dans un plan perpendiculaire au tirant entre une position active de blocage de la colonne et une position escamotée de déblocage de celle-ci, les moyens d'écartement comprenant au moins un organe de roulement (48,49) disposé entre des surfaces en regard de ces organes d'appui intermédiaire et de butée, et des moyens de déplacement (50) de cet organe de roulement le long d'une rampe (52) prévue sur la surface correspondante de l'organe d'appui intermédiaire, ces moyens de déplacement étant reliés aux moyens de manoeuvre et déplaçables à rotation autour du tirant pour amener l'organe de roulement (48,49) à écarter ces surfaces en regard de l'organe d'appui intermédiaire et de l'organe de butée, afin de rapprocher les flasques et bloquer la colonne en position, caractérisé en ce que ledit au moins un organe de roulement est déplaçable en rotation autour du tirant et en ce qu'au moins une partie du tirant reliée à l'organe de butée (44) est déplaçable en rotation pour suivre les déplacements dudit au moins un organe de roulement.

2. Dispositif selon la revendication 1, caractérisé en ce que l'ensemble du tirant est déplaçable à rotation entre les flasques et en ce que des moyens de roulement (53) sont interposés entre les moyens d'appui (54) de la première extrémité de celui-ci et un second organe d'appui intermédiaire (55) en contact avec le flasque correspondant (42).

3. Dispositif selon la revendication 1 ou 2, caractérisé en ce que le ou chaque organe de roulement (48,49) est formé par une bille.

4. Dispositif selon la revendication 1,2 ou 3, caractérisé en ce que le ou chaque organe de roulement est monté déplaçable entre la rampe (52) prévue sur la surface du premier organe d'appui intermédiaire et une gorge (51) de réception de cet organe ménagée dans la surface correspondante de l'organe de butée.

5. Dispositif selon l'une quelconque des revendications précédentes, caractérisé en ce que la ou chaque rampe (52) est formée par le fond d'une gorge de réception de l'organe.

6. Dispositif selon l'une quelconque des revendications précédentes, caractérisé en ce que les moyens de roulement (53) comprennent une butée à aiguilles.

7. Dispositif selon l'une quelconque des revendications précédentes, caractérisé en ce que les moyens de déplacement comprennent une cage (50) de déplacement dudit au moins un organe de roulement.

8. Dispositif selon l'une quelconque des revendications précédentes, caractérisé en ce que les moyens de déplacement sont reliés à un capot de protection (51) disposé autour des moyens de blocage et mobile en rotation autour de ceux-ci, les moyens de manoeuvre étant formés par un levier de manoeuvre (47) venu de matière avec ce capot.

9. Ensemble de colonne de direction réglable en position pour véhicule automobile, caractérisé en ce qu'il comporte un dispositif de blocage en position de la colonne, selon l'une quelconque des revendications précédentes.

## Claims

1. Device for locking an adjustable steering column, notably of a motor vehicle, in position, of the type comprising a column support structure, connected to the remainder of the vehicle structure and comprising two cheeks (41, 42) between which the column (43) is located, and means for locking the column in position by bringing the cheeks together, comprising a tie-rod (40) extending between the cheeks, a first end of which comprises means (54) for resting on one of the cheeks (42), whilst a second end is connected to locking elements comprising an abutment member (44), at the second end of the tie-rod, a first intermediate support member (45) in contact with the other cheek (41) of the support structure and axially displaceable on the tie-rod, and spacing means (46) arranged between the abutment member and the intermediate support member, said means (46) being connected to manoeuvring means (47) and rotationally movable in a plane perpendicular to the tie-rod between an active position for locking the column and a retracted position for releasing the column, the spacing means comprising at least one rolling member (48, 49) arranged between opposing surfaces of these intermediate support and abutment members, and means (50) for moving this rolling member along a ramp (52) provided on the corresponding surface of the intermediate support member, these displacement means being connected to the manoeuvring means and being rotationally movable around the tie-rod in order to cause the rolling member (48, 49) to move apart the opposing surfaces of the intermediate support member and the abutment member, in order to move the cheeks closer together and lock the column in position, characterised in that the said rolling member or members is or are rotationally movable about the tie-rod and in that at least part of the tie-rod connected to the abutment member (44) is rotationally movable in order to follow the movements of said rolling member or members.

2. Device according to claim 1, characterised in that the tie-rod assembly is rotationally movable between the cheeks and in that rolling means (53) are interposed between the support means (54) of the first end thereof and a second intermediate support member (55) in contact with the corresponding cheek (42).

3. Device according to claim 1 or 2, characterised in that the or each rolling member (48, 49) is formed by a ball bearing.

4. Device according to claim 1, 2 or 3, characterised in that the or each rolling member is displaceably mounted between the ramp (52) provided on the surface of the first intermediate support member and a groove (51) for receiving this member, provided in the corresponding surface of the abutment member.

5. Device according to any one of the preceding claims, characterised in that the or each ramp (52) is formed by the base of a groove for receiving the member.

6. Device according to any one of the preceding claims, characterised in that the rolling means (53) comprise a needle bearing abutment.

7. Device according to any one of the preceding claims, characterised in that the displacement means comprise a displacement casing (50) for said rolling member or members.

8. Device according to any one of the preceding claims, characterised in that the displacement means are connected to a protective cover (51) arranged around the locking means and rotationally movable around the latter, the manoeuvring means being formed by an operating lever (47) integrally formed with said cover.

9. Steering column assembly which is adjustable in position for a motor vehicle, characterised in that it comprises a device for locking the column in position, according to any one of the preceding claims.

## Patentansprüche

1. Vorrichtung zur Lagefixierierung einer verstellbaren Lenksäule, insbesondere eines Kraftfahrzeugs, mit einer Stützanordnung für die Säule, die mit der übrigen Struktur des Fahrzeugs verbunden ist und zwei Flansche (41,42) aufweist, zwischen denen die Säule (43) angeordnet ist, und mit Einrichtungen zur Verriegelung der Säule in ihrer Position durch Zusammenführen der Flansche, mit einer Zugstange (40), die sich zwischen den Flanschen erstreckt, deren eines Ende eine Einrichtung (45) zur Abstützung an einem der Flansche (42) aufweist und deren zweites Ende mit Verriegelungselementen verbunden ist, die ein Gegenlagerstück (44) umfaßt, und einem ersten Zwischenstück (45) in Berührung mit dem anderen Flansch (41) der Stützanordnung, das axial auf der Stange verschiebbar ist, und mit Distanzeinrichtungen (46) zwischen dem Gegenlagerstück (44) und dein Zwischenstück (45) in Berührung mit dem anderen Flansch der Stützanordnung und axial verschiebbar auf der Stange, und mit Distanzeinrichtungen (46) zwischen dem Genenlagerstück (44) und dem Zwischenstück (45), verbunden mit Einrichtungen (47) zur Betätigung, die in Drehrichtung in einer Ebene senkrecht zur Stange beweglich sind zwischen einer aktiven Position zur Verriegelung der Säule und einer zurückgezogenen Position zur Entriegelung der Säule, welche Distanzeinrichtungen wenigstens ein Rollenglied (48,49) zwischen den Oberflächen des Zwischenstücks (45) und des Gegenlagerstücks (44) umfassen, und einer Verschiebeeinrichtung (50) für das Rollenglied entlang einer Rampe (52) auf der entsprechenden Oberfläche des Zwischenstücks (45), welche Verschiebeeinrichtung mit der Betätigungseinrichtung verbunden und in Drehrichtung um die Zugstange herum zum Bewegen des Rollengliedes (48,49) und Trennen der Oberfläche in bezug auf das Zwischenstück (45) und das Gegenlagerstück (44) beweglich ist, damit die Flansche angenähert werden und die Säule in ihrer Position blockiert wird, dadurch **gekennzeichnet**, daß das wenigstens eine Rollenglied in Drehrichtung um die Stange verschiebbar ist und daß der wenigstens eine Bereich der Stange, der mit dem Gegenlagerstück (44) verbunden ist, in Drehrichtung verschiebbar ist entsprechend der Verschiebung des wenigstens einen Rollengliedes.

2. Vorrichtung nach Anspruch 1, dadurch **gekennzeichnet**, daß die Anordnung der Zugstange drehend zwischen den Flanschen verschiebbar ist und daß die Rolleneinrichtung (53) zwischen dem Zwischenstuck (45) am ersten Ende und einer Stützeinrichtung (54) in Berührung mit dem entsprechenden Flansch (42) beweglich ist.

3. Vorrichtung nach Anspruch 1 oder 2, dadurch **gekennzeichnet**, daß jedes Rollenglied (48,49) durch eine Kugel gebildet ist.

4. Vorrichtung nach Anspruch 1, 2 oder 3, dadurch **gekennzeichnet**, daß das oder die Rollenglieder beweglich zwischen der Rampe (52) auf der ersten Oberfläche des Zwischenstücks (45) und einer Aufnahmerille (51) dieses Zwischenstücks in der entsprechenden Oberfläche des Gegenlagerstücks (44) sind.

5. Vorrichtung nach einem der vorhergehenden Ansprüche, dadurch **gekennzeichnet**, daß die oder jede Rampe (52) gebildet ist durch den Boden einer Aufnahmerille in dem Gegenlagerstück.

6. Vorrichtung nach einem der vorhergehenden Ansprüche, dadurch **gekennzeichnet**, daß die Rolleneinrichtung (53) einen Anschlagstift aufweist.

7. Vorrichtung nach einem der vorhergehenden Ansprüche, dadurch **gekennzeichnet**, daß die Verschiebeeinrichtung einen Käfig (50) für die Verschiebung des wenigstens einen Rollengliedes umfaßt.

8. Vorrichtung nach einem der vorhergehenden Ansprüche, dadurch **gekennzeichne**t, daß die Verschiebeeinrichtung verbunden ist mit einer Schutzkappe (51), die um die Verriegelungseinrichtung herum angeordnet und in Drehrichtung um diese beweglich ist, welche Betätigungseinrichtung gebildet ist durch einen Betätigungshebel (47), der mit der Schutzkappe einheitlich verbunden ist.

9. Anordnung einer verstellbaren Säule für ein Kraftfahrzeug, **gekennzeichnet**, durch eine Verriegelungseinrichtung für die Position der Säule gemäß einem der vorhergehenden Ansprüche.
